# EUROPEAN PATENT SPECIFICATION

(11) **EP 4 324 890 B1**
(45) Date of publication and mention of the grant of the patent: **12.02.2025**
(21) Application number: 22191313.0
(22) Date of filing: 19.08.2022
(51) Int. Cl.: C09D 11/30, B41M 5/00, C09D 11/54, C09D 11/102, C09D 11/107, C09D 11/322

(54) **PRIMER COMPOSITION FOR INKJET PRINTING OF NON- OR LOW-ABSORPTIVE SUBSTRATES WITH AQUEOUS PIGMENTED INKS**
GRUNDIERUNGSZUSAMMENSETZUNG FÜR DEN TINTENSTRAHLDRUCK VON NICHT- ODER SCHWACHABSORBIERENDEN SUBSTRATEN MIT WÄSSRIGEN PIGMENTIERTEN TINTEN
COMPOSITION D'AMORCE POUR L'IMPRESSION À JET D'ENCRE DE SUBSTRATS NON ABSORBANTS OU À FAIBLE ABSORPTION AVEC DES ENCRES PIGMENTÉES AQUEUSES

(43) Date of publication of application: 21.02.2024
(73) Proprietor: Sihl GmbH, 52355 Düren (DE)
(72) Inventor: SCHÄFER, Manfred, 50823 Köln (DE); KEULDERS, Roy, 6419 PG Heerlen (NL); NIEMÖLLER, Axel, 52355 Düren (DE); OHR, Steffen, 6210 Sursee (CH)
(74) Representative: f & e patent

(56) References cited:
- US-A1- 2022 119 666
- US-B1- 9 376 582

## Description

### FIELD OF THE INVENTION

The present invention relates to an aqueous coating composition to be used for forming an inkjet-printable primer layer on non-absorptive or low-absorptive substrates, a coated substrate comprising the inkjet-printable primer layer as well as methods for coating the substrates and inkjet-printing the coated substrates.

### BACKGROUND OF THE INVENTION

Inkjet printing onto non-absorptive or low-absorptive substrates such as polymeric films, foils, coated papers, ceramics, glass is critical due to the low viscosity of inkjet inks and the resulting print artefacts like intercolor bleeding, line sharpness issues, dot spreading, and coalescence. Furthermore, the adhesion of inkjet inks to such non-adsorptive substrates can be critical if there is no binder in the inks. In order to overcome these issues, it is known to apply inkjet coatings to the non-absorptive substrate. Inkjet coatings such as microporous inkjet coatings are able to absorb the ink in a short time which leads to a fast fixation of the ink droplets. As these inkjet coatings generally need to have a coat weight of at least 15 g/m² to handle the ink laydown they are coated offline before printing and are adding high costs to the substrate material and the final print. For commercial presses with single pass printing, i.e. in packaging or décor applications, these costs are not acceptable. Primer coatings which are applied in lower coat weights and which are therefore less expensive have also been described, particularly in combination with appropriate inks. Inkjet primer compositions often contain coagulants, such as dissolved multivalent metal cations, which play an important role in precipitating anionically charged dispersed ink ingredients, mainly the dispersed anionic color pigments and optionally anionic binders.

WO 2022/003336 A1 describes a process for preparing digitally printed laminates including applying a primer to a first substrate; printing an aqueous pigmented inkjet printing ink onto the primed substrate; laminating a second substrate to the primed and printed first substrate; wherein the primer is an aqueous coating composition comprising: (a) a water-dispersible polymer and a multivalent metal salt; or (b) a water-soluble polymer and a multivalent metal salt; and wherein the aqueous pigmented inkjet printing ink comprises an anionic polymeric dispersion or an anionic solution polymer. The aqueous primer composition may further comprise a dispersion of an inorganic material such as colloidal silica or alumina, preferably a modified anionic colloidal silica.

EP 3 928 998 A1 concerns a recording medium comprising a substrate, an ink receiving layer (1) disposed on the substrate and containing a first inorganic particle and a first binder, and an ink receiving layer (2) disposed on the ink receiving layer (1) and containing a second inorganic particle and a second binder, where the first binder and the second binder are each a water-insoluble resin. The first inorganic particle can be selected from alumina hydrate, gas phase alumina, and gas phase silica and the second inorganic particle is preferably colloidal silica.

US 2022/119666 A1 relates to an aqueous composition for pre-treating a substrate prior to inkjet printing thereon, the aqueous composition comprising one or more water-soluble salts of a multivalent metal cation; one or more nonionic or cationic water-soluble or water-dispersible polymeric binder materials, and fine surface-treated visible light-scattering particles to provide a white background on clear film substrates or on dark-colored substrates for printing high quality monochrome or polychrome images. The surface-treated visible light scattering particles comprise silicon dioxide, zinc oxide, titanium dioxide, zirconium oxide, aluminum oxide, barium sulfate, and/or magnesium oxide, preferably titanium dioxide.

### SUMMARY OF THE INVENTION

It is the object of the present invention to provide a coating composition useful to prepare a thin print primer layer having a low coating weight for high-speed inkjet printing on non-absorbing or low absorbing surfaces. The substrates coated with the primer composition at low coat weights should be printable in high print quality and should show good adhesion between primer and substrate in printed and unprinted areas as well as no stickiness (antiblocking properties) when in contact to other surfaces during coating, storage or further processing.

The object is met by an aqueous coating composition comprising :(a) from 20 to 79 % by weight, preferably from 30 to 69 % by weight, more preferably from 35 to 64 % by weight, and most preferably from 40 to 59 % by weight, of a dispersed polymeric binder, (b) from 20 to 79 % by weight, preferably from 30 to 69 % by weight, more preferably from 35 to 64 % by weight, and most preferably from 40 to 59 % by weight, of aluminum hydroxide oxide particles, (c) from 0.1 to 10 % by weight, preferably from 0.3 to 5 % by weight, more preferably from 0.5 to 2 % by weight, of dissolved multivalent metal cations, and (d) inorganic and/or organic counteranions of the metal cations, wherein the weight percentages are based on the solids content of the aqueous coating composition.

The present invention is also directed to a substrate at least partially coated with the aqueous coating composition forming an inkjet-printable primer layer.

The present invention further concerns a method for coating a substrate comprising applying the aqueous coating composition to the substrate to obtain an inkjet-printable primer layer as well as a method for preparing an inkjet-printed substrate further comprising the step of printing the inkjet-printable primer layer of the coated substrate by a water-based inkjet-printing process.

### BRIEF DESCRIPTION OF THE FIGURE

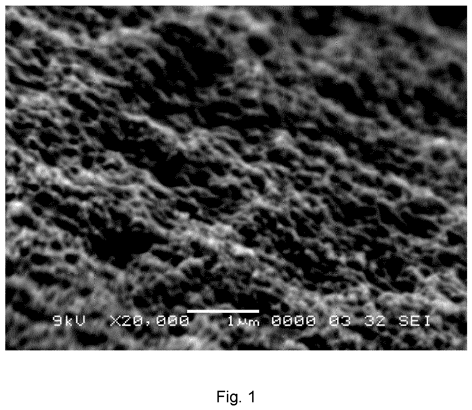

Fig. 1.is a SEM micrograph of an inkjet-printable primer layer formed from the inventive aqueous coating composition according to Example 1 (magnification 20,000 x)

### DETAILED DESCRIPTION OF THE INVENTION

### Dispersed polymeric binder (a)

The dispersed polymeric binder (a) of the inventive aqueous coating composition comprises polymer particles, wherein the term "polymer particles" is understood in a broad sense as including particles in the solid, viscoelastic (rubbery) or liquid state depending on the glass transition temperature and/or melting temperature of the polymer. That means that the polymeric binder is suspended or emulsified in the aqueous medium. Typically, the polymer particles of dispersed polymeric binder (a) have a median particle size (Dᵥ₅₀) size in the range of from 10 nm to 500 nm, preferably of from 20 to 300 nm, more preferably from 50 to 250 nm, and most preferably from 75 to 230 nm, as determined by laser diffraction according to ISO 13320:2020-01, for example on an LS 13320 device from Beckman Coulter.

To improve dispersibility of the polymeric binder (a) and its stability in the aqueous coating composition, the polymer particles according to the invention are typically cationic or non-ionically stabilized. Cationic polymers are commonly prepared by including cationic groups or groups that can be converted into a cationic group into the polymer structure, for example, tert-amino groups that can be protonated with an acid or quaternized.

Accordingly, non-ionically stabilized polymers are commonly prepared by incorporating hydrophilic groups into the polymer structure, typically comprising polyoxyalkylene groups, e.g. polyoxyethylene or polyoxyproplyene groups. The stabilization mechanism of polymer particles in nonionic dispersions is based on a steric stabilization mechanism usually provided by hydrophilic soft segments. The portions of the chains containing the nonionic segments spread out to the continuous phase, that is, to the water phase, hindering the coalescence effect among the formed polymer particles.

The polymeric binder preferably comprises polyurethane particles or poly(meth)acrylate particles, or copolymers and combinations thereof, more preferably non-ionically stabilized polyurethane particles, cationic polyurethane particles, non-ionically stabilized poly(meth)acrylate particles, cationic poly(meth)acrylate particles, and even more preferably non-ionically stabilized polyurethane particles and/or cationic polyurethane particles.

The polymer particles are typically added to the aqueous coating composition of the present invention in the form of an aqueous dispersion. Suitable dispersions of polymer particles preferably have a solids content between 30 and 60 % by weight, a pH value between 4.0 and 8.0, more preferably between 5.0 and 7.0, and a minimum film forming temperature (MFFT) of below 35 °C, more preferably below 20 °C. The aqueous dispersion of the polymer particles should be compatible with the multivalent metal cations (c), i.e., it should be stable in the presence of dissolved multivalent metal cations (c) and dispersed aluminum hydroxide oxide particles (b) meaning that neither flocculation nor a considerable increase in viscosity should occur.

The aqueous coating composition of the present invention comprises from 20 to 79 % by weight, preferably from 30 to 69 % by weight, more preferably from 35 to 64 % by weight, and most preferably from 40 to 59 % by weight, of the dispersed polymeric binder (a), based on the solids content of the coating composition.

### Polyurethane particles

Suitable polyurethanes to be used as the polymeric binder (a) in the present aqueous coating composition can be aromatic and/or aliphatic, i.e. produced from aromatic, aliphatic and/or cycloaliphatic polyisocyanates (e.g. hexamethylene diisocyanate and isophorone diisocyanate), and can be produced from low molecular glycols (e.g. ethylene glycol, 1,4-butanediol, and 1,6 hexanediol), polyether diols, polyester diols, polyacrylic diols, and polycarbonate diols or any blend or hybrid thereof. Aliphatic or cycloaliphatic polyurethanes are preferred.

Cationic polyurethanes are typically prepared by incorporating an amino group, e.g. side chains containing tertiary or quaternary amino group, into the polymer and protonizing the amino group with an acid. Non-ionically stabilized polyurethanes are commonly prepared by incorporating polar groups, preferably side chains containing polyoxyalkylene moieties, into the polymer.

The polyurethane may have hydroxyl groups in such an amount that the hydroxyl value of the polyurethane is no more than 50 mg KOH/g. Preferably, the hydroxyl value is < 1 mg KOH/g, more preferably it is 0 mg KOH/g.

The polyurethane particles are typically introduced into the aqueous coating composition of the present invention in the form of an aqueous dispersion. There are a variety of commercially available polyurethane dispersions that can be used in the present invention including those sold under the trademarks NeoRez^{®}, Bayhydrol^{®} (available from Covestro AG), Permax^{®}, Sancure^{®} and PrintRite^{®} (available from Lubrizol Deutschland GmbH, Hamburg), Syntegra^{®} (available from (The Dow Chemical Company), Joncryl^{®} (available from BASF SE), Beetafin^{®} (available from BIP (Oldbury) Ltd., UK), Daotan^{®} (available from Allnex GmbH, Wiesbaden), Witcobond^{®} (available from Lanxess AG), ESACOTE^{®} (available from Lamberti S.p.A., Italy), Patelacol^{®}, Hydran^{®} and Vondic^{®} (available from DIC Corporation, Japan).

Preferred commercially available non-ionically stabilized polyurethane dispersions are NeoRez^{®} R-9340 (flexible non-ionically stabilized polyurethane dispersion, MFFT < 5°C; acid value = 0 mg KOH/g, dry resin solids 40 %, pH 6.5 - 7.5), Baybond^{®} PU 404 (non-ionic polyester polyurethane, viscosity at 23°C spindle L3/30 rpm, M092-ISO 2555, < 1500 mPa·s, pH value at 20 °C 5.5 - 7.5). Further examples for non-ionically stabilized polyurethane dispersions are Esacote^{®} NBD, Esacote^{®} PU 931, Esacote^{®} PU 3511, Esacote^{®} PU 5913, Permax^{®} 232, Vondic^{®} 1050B-NE, Vondic^{®} 1310NE, Vondic^{®} 8510, Vondic^{®} 1230NE, Vondic^{®} 1970NE Vondic^{®} 1980NE, Vondic^{®} 2210, Vondic^{®} 2220, Witcobond^{®} 320, and Witcobond^{®} 447-05. Examples of commercially available cationic polyurethane dispersion are Witcobond^{®} W-213, Witcobond^{®} 214 (aliphatic polyurethane), Esacote^{®} PU 2001, Esacote^{®} PU C1, Esacote^{®} MD23, PrintRite^{®} DP675, Sancure^{®} 20051, Patelacol^{®} IJ50, and Hydran^{®} CP 7020.

### Poly(meth)acrylate particles

Suitable poly(meth)acrylates to be used as the polymeric binder (a) in the present aqueous coating composition include homopolymers and copolymers of acrylate and/or methacrylate(s), for example, alkyl, aryl, aralkyl or hydroxyalkyl esters of an acrylic acid or a methacrylic acid, as well as copolymers of the above-mentioned monomers with additional ethylenically unsaturated monomers such as one or more of acrylonitrile, acrylamide, vinyl ethers such as vinyl methyl ether, vinyl acetate, and styrene. Acidic comonomers such as acrylic acid or methacrylic acid lead to anionic poly(meth)acrylates. Therefore, poly(meth)acrylates suitable for the present invention are typically not derived from acidic monomers. In order to achieve a low MFFT of an aqueous dispersion of the poly(meth)acrylate particles (such as < 35 °C) it is preferred to (co)polymerize monomers whose homopolymers have a low Tg such as below 20 °C as reported in standard sources, e.g. in J. Brandrup, E.H. Immergut, Polymer Handbook 3rd Edition, John Wiley & Sons 1989, page VI/215-219.Examples for such monomers are 2-ethylhexyl acrylate, butyl acrylate, iso-butyl acrylate, ethyldiglycol acrylate, propyl acrylate, and ethyl acrylate.

The non-ionic stabilization of the poly(meth)acrylate particles can be achieved by copolymerizing hydrophilic monomers. Cationic poly(meth)acrylates can be prepared by copolymerizing amino group-containing monomers such as 2-dimethylaminoethyl acrylate (DMAEA) or 2-dimethylaminoethyl methacrylate (DMAEMA) which can be quaternized or protonated with an acid.

The poly(meth)acrylate particles are typically introduced into the aqueous coating composition of the present invention in the form of an aqueous dispersion. Examples for commercially available cationic poly(meth)acrylate dispersions are Synprint^{®} AC 4110 (available from Zschimmer & Schwarz GmbH & Co KG, Germany) and Neocryl^{®} XK-30 (available from Covestro). Examples for non-ionic poly(meth)acrylate dispersions are PrintRite^{®} 595FF (available from The Lubrizol Corporation) and Neocryl^{®} XK-37 (available from Covestro AG)

### Water soluble polymeric binder (e)

A part of the dispersed polymeric binder (a) can be replaced with a water-soluble polymeric binder (e) which can be incorporated into the aqueous coating composition in an amount replacing from > 0 to 50 % by weight, preferably from 2 to 25 % by weight of the dispersed polymeric binder (a), based on solids. The presence of a water-soluble polymeric binder (e) can be advantageous as regards the stability, the viscosity, the print performance, and the adhesion of the aqueous coating composition.

As the water-soluble polymeric binder (e) any polymeric binder with a solubility in water at 20 °C above 1 % by weight can be used. As a matter of fact, it should be compatible with the other components of the aqueous coating composition. Suitable polymers to be used as water-soluble binder (e) are non-ionic or cationic polymers based on poly(vinyl alcohol)s, poly(vinyl alcohol) derivatives, poly(ethylene oxide), poly(vinylpyrrolidone), poly(vinylmethylether), poly(vinylamine), poly(2-ethyl-2-oxazoline), cationic or non-ionic water-soluble poly(meth)acrylates and copolymers thereof, poly(acrylamide) and copolymers thereof, cellulose derivatives, such as methylcellulose and ethylcellulose; or any combination thereof. Preferably, the polymeric binder comprises poly(vinyl alcohol), poly(vinyl alcohol) derivatives, or any combination thereof.

The term "poly(vinyl alcohol)" is generally acknowledged in the art as a completely or partially hydrolyzed poly(vinyl acetate). The degree of hydrolysis attributed to a poly(vinyl alcohol) designates the degree of hydrolysis of the poly(vinyl acetate) in accordance with standard practice. The degree of hydrolysis is from 80 to 99 mol %, preferably from 86 to 99 mol %. The degree of hydrolysis (saponification) indicates what percentage of the basic poly(vinyl acetate) molecules is "saponified" to poly(vinyl alcohol). Examples for modified poly(vinyl alcohol)s are cationic poly(vinyl alcohol)s, silicon modified poly(vinyl alcohol), keto group modified poly(vinyl alcohol), and vinyl alcohol/N-vinylformamide copolymers.

### Aluminum hydroxide oxide particles (b)

Aluminum hydroxide oxide particles (b) within the meaning of the present invention are small primary aggregates of aluminum hydroxide oxide crystallites which are dispersed in the aqueous coating composition, i.e., the median particle size (Dᵥ₅₀) as used herein with respect to the aluminum hydroxide oxide particles means the median primary aggregate size (Dᵥ₅₀)

Aluminum hydroxide oxide is also known as aluminum oxide hydroxide, aluminum oxyhydroxide, or alumina hydrate and has the formula AlO(OH) (= Al₂O₃·H₂O). Preferred types of aluminum hydroxide oxide for use in the present invention are boehmite and pseudoboehmite.

Boehmite is a mineral having an orthorhombic unit cell (*a* = 3.693 ° A, *b* = 12.221 ° A, and c = 2.865 ° A), classified as *γ*-AlO(OH). Its crystal structure consists of double layers of oxygen octahedrons with a central aluminum atom. The outfacing oxygen is bonded via hydrogen bonds to the hydroxyl group of the adjacent layer of octahedrons. Due to the weak bonds, boehmite is prone to intercalation, that is, the inclusion of small molecules, usually water, in between these layers. This causes a larger spacing in [010] direction and a perfect cleavage perpendicular to the general direction of the hydrogen bonding. Boehmite with an increased spacing in the [010] direction is referred to as pseudoboehmite and mostly amorphous boehmite is usually referred to as gel. Boehmite can be found in nature or it can be precipitated and grown from solution of aluminum salts and alumina under hydrothermal conditions or precipitated from aluminum alkoxides by hydrolysis.

Favorably, the boehmite crystallites are not needle-shaped, preferably they are tabular and more preferably have an average aspect ratio of 3.0 or more and 10 or less and a tabular surface with a major axis-to-horizontal ratio of 0.60 or more and 1.0 or less. The aspect ratio can be determined by a method disclosed in Japanese Patent No. JP 5160154 B2. The aspect ratio is herein expressed as the ratio of the diameter to the thickness of a particle. The term "diameter" as used herein refers to the diameter of a circle having the same area as the projected area of a particle of the alumina hydrate as observed with a microscope or an electron microscope (equivalent circle diameter). The major axis-to-minor axis ratio of the tabular surface is defined as the ratio of the minimum diameter to maximum diameter of the tabular surface as observed with a microscope in the same manner as described for the aspect ratio.

The median particle size (Dᵥ₅₀) of the boehmite crystallites in the dry powder can, for example, be in the range of from 7 to 80 nm, preferably from 8 to 50 nm, and more preferably from 10 to 20 nm, as determined by X-ray diffraction on X-ray diffractometers supplied by Siemens or Philips.

Pseudoboehmite is characterized by a higher water content (AlO(OH)·x H₂O (0 < x < 1.0). It is essentially finely crystalline boehmite which consists of the same or similar octahedral layers in the xz plane but lacks three-dimensional order because of a restricted number of unit cells in y direction. It consists of a significant number of crystallites which contain a single unit cell along y or single octahedral layers. It contains more water which is commonly intercalated between octahedral layers, normally randomly arranged, but sometimes regularly. The water content consists of adsorbed and chemically bound water. The higher water content compared to boehmite can be explained by a smaller crystallite size. While boehmite consists of relatively long AIOOH chains that have terminal H₂O groups, the chains in pseudoboehmite are significantly shorter. This translates into a significantly higher specific water content due to the terminal water groups.

The small primary aggregates of boehmite or pseudoboehmite crystallites can be obtained by dispersion of secondary larger agglomerates having a mean particle size in the range of from 1 µm to 100 µm present in commercially available boehmite or pseudoboehmite powders, e.g. as delivered from a spray drying process.

The dispersed boehmite or pseudoboehmite particles (small primary aggregates of boehmite or pseudoboehmite crystallites) typically have a median particle size (Dv50) in the range of from 20 to 500 nm, typically from 30 nm to 300 nm, preferably from 50 nm to 200 nm, more preferably from 80 to 180 nm, as determined by laser diffraction according to ISO 13320:2020-01, for example on an LS 13320 device from Beckman Coulter.

The primary aggregates of boehmite or pseudoboehmite have a porous structure. Typically, boehmite or pseudoboehmite particles have an average pore volume of from 0.5 to 1.5 ml/g, preferably from 0.8 to 1.3 ml/g, as determined herein by means of nitrogen sorption according to the methods of Barrett, Joyner and Halenda (BJH) and Gurwitsch as described in DIN 66134:1998-02 and a BET surface area of from 100 to 400 m²/g, preferably from 120 to 180 m²/g, as determined by gas adsorption according to ISO 9277:2010. The average pore volume and the BET surface area are determined by gas adsorption on the powder after calcination at 550°C for 3 h.

Suitable commercially available boehmite powders to be used in the ink-receiving layer (b) include DISPERAL^{®} and DISPAL^{®} grades available from Sasol, e.g. DISPERAL^{®} HP8, HP10, HP 14, HP 14/7 and HP 18, preferably HP 14, and BOEHMITE B8014 LM35 available from Tianjin Boyuan, China.

The aqueous coating composition of the present invention comprises from 20 to 79 % by weight, preferably from 30 to 69 % by weight, more preferably from 35 to 64 % by weight, and most preferably from 40 to 59 % by weight, of the aluminum hydroxide oxide particles (b), based on the solids content of the coating composition.

### Acid dispersing agent (f)

In order to disperse the aluminum hydroxide oxide particles, the aqueous coating composition may comprise an acidic dispersing agent (f), preferably being an organic and/or inorganic acid having a pkₐ value of less than 5.0; more preferably less than 4.9, even more preferably less than 4.0, still more preferably less than 3.0, and most preferably less than 2.0, such as HCl, HBr, HNO₃, formic acid, acetic acid, propionic acid, lactic acid, citric acid, and sulfamic acid, and any combinations thereof. The acidic dispersing agent may be used in an amount of from more than 0 to 10 % by weight, preferably from 0.2 to 5 % by weight, and more preferably from 0.3 to 1 % by weight, each based on the amount of the aluminum hydroxide oxide particles. Alternatively, a suitable acid can be added in the production process of the aluminum hydroxide oxide powder which may lead to a self-dispersing powder (e.g. DISPERAL^{®} HP14/7 available from Sasol, which is surface-modified with citric acid).

### Mulitvalent metal ions (c) and counterions (d)

The aqueous coating composition typically comprises multivalent metal ions (c) selected from Ca²⁺, Mg²⁺, Zn²⁺, Al³⁺, Fe²⁺, Fe³⁺, Ti⁴⁺, Zr⁴⁺, and combinations thereof, preferably from Ca²⁺, Mg²⁺, Al³⁺ and combinations thereof. The aqueous coating composition of the present invention comprises from 0.1 to 10 % by weight, preferably from 0.3 to 5 % by weight, and more preferably from 0.5 to 2 % by weight, of dissolved multivalent metal cations (c), based on the solids content of the coating composition.

The polyvalent metal cations must be dissolved in the aqueous coating composition. Therefore, counteranions (d) are chosen so that they do not precipitate with the metal cations (c) from the aqueous coating composition as a solid. Examples for counterions are chloride, bromide, borate, nitrate, hydrogensulfate, sulfate, hydrogencarbonate, acetate, formate, propionate, butyrate, benzoate, gluconate sulfamate, succinate, citrate, lactate, glycerate, p-toluolsufonate, and combinations thereof, preferably chloride, acetate, or combinations thereof.

Preferred combinations of multivalent metal cations (c) and counterions (d) are those whose salts have a solubility in water at 20 °C of at least 10 g/l. Most preferred combinations of multivalent metal cations (c) and counterions (d) are: Ca²⁺/chloride, Ca²⁺/acetate, Mg²⁺/chloride, Mg²⁺/acetate, Al³⁺/chloride, and Al³⁺/acetate. The multivalent metal cations (c) and the counterions (d) are typically introduced into the inventive aqueous coating composition in salt form. Most preferred salts are calcium chloride, magnesium chloride, calcium acetate, magnesium acetate, basic aluminum diacetate, aluminum chloride, and aluminum chlorohydrate. Another suitable salt is zirconium oxychloride.

### Further additives

Further additives to the aqueous coating composition of the present invention are for example biocides, surfactants (wetting agents), antifoaming agents, viscosity modifiers, crosslinking agents, and organic solvents.

Examples for crosslinking agents are compounds such as formaldehyde, glyoxal and glutaraldehyde, polyisocyanates, aziridines, carbodiimide, epoxy compounds, dihydrazides, i.e. adipinic acid dihydrazide, as well as inorganic compounds such as boric acid, and zirconium salts. Particularly when poly(vinyl alcohol) is used as a water-soluble binder (e), glyoxal, boric acid, and adipinic acid dihydrazide are preferred crosslinkers.

Preferably, the aqueous coating composition of the present invention is free of organic solvents. If present, the organic solvent is comprised in a maximum amount of 10 % by weight, based on the total weight of the aqueous coating composition. Suitable organic solvents include alcohols such as ethanol, isopropanol, and n-propanol, as well as acetone and methylethylketone and mixtures of these solvents.

### Aqueous coating composition

Typically, the aqueous coating composition of the present invention has a solids content of from 1 to 50 % by weight, preferably from 5 to 40 % by weight, and more preferably from 10 to 30 % by weight. The pH value of the aqueous coating composition can be within the range of from 2.8 to 6, preferably from 3.0 to 5.5, and more preferably from 3.5 to 5.0. It is adjusted to stabilize the particles in the aqueous medium.

The inventive aqueous coating composition is preferably prepared by mixing the single components (a) to (d), optional component (e), and further optional components in already dissolved or dispersed from. If not already commercially available in these forms, these components are preferably pre-dispersed or dissolved followed by mixing these aqueous compositions to the final coating composition. This can be done in any order. Preferably a dispersion of the polymeric binder (a) is added slowly to a mixture of a solution of a salt of polyvalent metal cation (c) and counterion (d) and the dispersion of the aluminum hydroxide oxide particles (b).

All components should be compatible in the final aqueous coating composition meaning that no precipitation or gelation occurs over time. Stability for a minimum of 6 months is preferred. The final pH value of the aqueous coating composition depends on the used components and their pre-dispersions or solutions and can be adjusted in each step of formulation by adding an acidic dispersing agent (f).

### Substrates

The aqueous coating composition of the present invention can be applied to different non-absorptive or low-absorptive substrates followed by drying off water and optional solvent in order to obtain a dry primer coating (primer layer) before inkjet printing.

Non-absorptive substrates include plastic substrates such as polymer films (including polymer film laminates), e.g. flexible packaging laminates and décor films; paper or cardboard coated or laminated with polymeric layers, e.g. both side resin coated photo base paper; metal foils such as aluminum foil; substrates coated or laminated with metallic layers; glass substrates; and ceramic substrates such as tiles. Examples for low-absorptive substrates are barrier papers; highly sized or coated or impregnated papers or carboards, such as wallpapers, décor papers, and liners for corrugated boards; coated canvas; and coated wovens or non-wovens. The substrates can be flexible substrates such the flexible substrates mentioned above or rigid substrates such as the rigid substrates mentioned above and also including various plastic parts.

Non-absorptive or low-absorptive substrates do not or only slowly take up aqueous coatings or water into their mass. In the case of low-absorptive papers and cardboard, the Cobb 30 value according to DIN EN ISO 535:2014-06 is below 10 g/m², preferably below 5 g/m². It is preferred that the paper substrates are white or colored papers which are sized in the mass, surface sized, impregnated, pre-treated or coated, i.e. barrier coated. Particularly, substrate papers may be commercial papers dedicated to graphic applications, i.e. for photography, advertising, documents, packaging, i.e. food packaging, cardboard boxes, décor, i.e. flooring, wall decoration, furniture, or other applications. The paper weight can be from 30 g/m² to 300 g/m² for paper and from 250 g/m² to 500 g/m² for cardboards.

Particularly, the inventive aqueous coating composition is suitable to be applied to polymer films including polymer film laminates comprising more than one polymer films. The polymer film including a polymer film laminate can comprises a homogenous top layer as adhesion promoting layer which is a coated or coextruded layer.

The polymer film can be any polymeric material that can be processed to film and may be unoriented, uniaxially oriented or biaxially oriented film. Typically, the polymer film comprises a thermoplastic material. Useful thermoplastic materials include polyesters, polyolefins, polystyrenes, polyamides, polyacrylates, polycarbonates, polyvinylchloride, derivates of cellulose such as cellulose triacetate, biodegradable polymers such as starch and poly(amino acid)s, and blends and copolymers of these polymers.

Suitable biaxially oriented polymer films are commercially available and have high initial tear strength and low propagation tear resistance. The biaxially oriented thermoplastic material can be selected from the group consisting of polyesters, polyolefins, polystyrenes, polyamides, polycarbonates, and polyvinyl chloride, including homo- and copolymers and blends thereof. Preferably, the thermoplastic material is selected from the group consisting of polyesters, even more preferably poly(ethylene terephthalate)s, poly(ethylene naphthalate)s, and polylactides (colloquially also referred to "poly(lactic acid)" - PLA); polyolefins, even more preferably polypropylene; polyamides such as PA 6; polyvinyl chloride, and blends and copolymers thereof. Most preferred biaxially oriented polymer films are biaxially oriented polypropylene (BOPP) such as BOPP films available Innovia under the tradename Rayoface^{®}, biaxially oriented poly(ethylene terephthalate) (BOPET) such as BOPET films available from Mitsubishi under the tradename Hostaphan^{®} and from DuPont under the tradenames Mylar^{®} and Melinex^{®}, biaxially oriented polylactide (BOPLA), and biaxially oriented polyamide (BOPA), e.g. BOPA6. The biaxially oriented polymer film can also be a coextruded polymer film. Coextruded biaxially oriented polymer films wherein the first layer is a polymer as described above and the second layer is a polymer having better adhesion to the aqueous coating composition. i.e. a propylene/ethylene copolymer, are preferred.

Suitable uniaxially oriented polymer films include shrink sleeves. The thermoplastic polymer of a shrink sleeve can be selected from the group consisting of (co)polyvinyl chloride, (co)polystyrene, (co)polyolefins, (co)polyesters as well as mixtures, blends and copolymers thereof, more preferably from the group consisting of polyvinyl chloride (PVC), glycol-modified polyethylene terephthalate (PET-G), polystyrene (PS), styrene-butadiene copolymer, polypropylene (PP), polyethylene (PE), polylactic acid (PLA) and cyclic olefin copolymer/polyethylene (COC/PE) as well as mixtures, blends and copolymers thereof. Both said (co)polymers as well as the films made thereof, which optionally may already be mono- or biaxially oriented, are commercially available.

Most preferred non-absorptive substrates to be coated with the inventive aqueous coating composition are polymer films, including polymer film laminates, which comprise a polyolefin, such as polypropylene, e.g. cast polypropylene (cPP) and biaxially oriented polypropylene (BOPP), and polyethylene; a polyester such as poly(ethylene terephthalate) (PET, APET), e.g. biaxially oriented poly(ethylene terephthalate) (BOPET); or a polyamide.

The polymer film can be transparent, translucent or opaque, e.g. white opaque or colored opaque. Suitable films can be foamed, cavitated, or dyed in the mass, e.g. with a white pigment. The surface(s) of the polymer film can be treated, e.g. by corona treatment, flame treatment, or chemical treatment, e.g. with a thin polyacrylate coating. The treatment of the surface can have various effects such as an improvement of wettability to the aqueous coating composition, especially in the case of BOPP films, and particularly an increase of adhesion. The thickness of a suitable polymer film is generally in the range of from 8 to 400 µm.

### Inkjet-printable primer layer

The aqueous coating composition of the present invention can be coated onto the substrate to form the inkjet-printable primer layer by any conventional coating method known in the art. For example, the aqueous coating composition can be applied by means of a curtain coater, a die coater, a roll coater, an air knife coater, a blade coater, a rod coater, a reverse gravure coater, a bar coater, by flexographic or gravure printing. Application by a revers gravure coating, gravure printing or flexographic printing is preferred.

After application to the substrate the aqueous coating composition is dried to remove water and optional solvent for obtaining the final inkjet-printable primer layer. Preferably, an active drying step, for example convective drying (in hot air), contact drying, IR drying, NIR drying or any combination thereof, is performed, typically at a temperature of at least 50 °C, to reduce drying time.

Preferably, the aqueous coating composition is applied directly to the substrate, meaning that the inkjet-printable layer is in direct contact with the substate. It is further preferred that the inkjet-printable primer layer formed from the aqueous coating composition is the single inkjet-printable layer. The aqueous coating composition can be coated onto the substrate in one layer in a single application step or it can be applied in more than one partial layers, i.e. more than one inventive aqueous coating compositions having varying compositions are coated onto the substrate subsequently. The two or more partial layers together form the inkjet-printable primer layer. Preferably, the inkjet-printable primer layer is applied onto the substrate in one layer in a single application step.

The aqueous coating composition of the present invention can be applied either separately from the inkjet printing process in a separate coating process or inline in the inkjet printing machine, i.e. with printing speed in a coating unit which is arranged upstream of the printing station. It is advantageous to apply it in a roll-to-roll process. Preferably, the aqueous coating composition is applied inline in the printing process, more preferably inline in the printing machine in a roll-to-roll process.

Typically, the aqueous coating composition is applied to the substate to obtain an inkjet-printable primer layer having a dry coating weight of from 0.3 to 8.0 g/m², preferably from 0.5 to 6.0 g/m², more preferably from 0.8 to 5.0 g/m², and most preferably from 1.3 to 4.0 g/m². The actual dry coating weight can be adapted to the intended use of coated substrate, for example to the type of printer and ink employed to print onto the inkjet-printable primer layer. The ink dot gain and the precipitation reactivity can be controlled by selecting an appropriate dry coating weight and/or concentration of the multivalent metal cation (b) as well as the overall composition within the limits of the invention.

Preferably, the inkjet-printable primer layer is glossy when applied to a glossy substrate, i.e. when applied to a glossy substrate (having a gloss of about 65 GU) a gloss of about 50 to 85 GU is achieved.

The aluminum hydroxide oxide particles (b) provide pores to the primer layer after coating and drying. With "porous" is meant that the pores in the aluminum hydroxide oxide particles (primary aggregates) and/or in the coating comprising the aluminum hydroxide oxide particles and the binder have a pore size (diameter) ranging from 10 nm to 1 µm, preferably from 20 nm to less than 0.5 µm, and more preferably from 50 nm to less than 0.2 µm, as measured by scanning electron microscopy (SEM). The porosity of the inkjet-printable primer layer is evident in Fig. 1.

The surface of the inkjet-printable primer layer is non-sticky and smooth. This means that there is no blocking or adhesion to other surfaces at room temperature or increased temperature, e.g. 60 °C, even under increased pressure, particularly to the backside of a substrate which is wound to a roll after application and drying of the inventive aqueous coating composition and optionally printing.

Typically, the inkjet-printable primer layer is transparent. When the substrate is a transparent film having a haze value of no more than 5 %, the coated substrate according to the present invention preferable has a haze value of no more than 7 %, more preferably no more than 10 % and most preferably no more than 15 % as determined according to ASTM D1003, Procedure A.

### Printing

The inkjet-printable primer layer of the inventive coated substrate can be printed by a water-based ink-jet printing process. Typically, it is printed in a high-speed printing process, more preferably in a single pass printing process. Advantageously, the coated substrate is printed with a digital inkjet printer running with high printing speed such a printing speeds from 5 to 300 m/min, e.g. from 30 or 60 to 300 m/min, preferably comprising a single pass printing system, i.e. a printing system comprising a stationary printing bar over the web width which bar comprises the printing heads. High speed printing processes include roll-to-roll printing and sheet printing, for example in a sheet fed digital inkjet press.

Exemplary high speed single pass inkjet digital presses for aqueous pigmented inks are commercially available from Hewlett Packard (PageWide Industrial Presses), Kodak (Prosper, Versamark), Canon (ImagePress), Fujifilm (Jetpress), Screen (Truepress), Miyakoshi (MJP30-AXF), KBA (RotaJet), Palis (Padaluma Printing), AstroNova/Trojan, Afinia, Arrow Systems, and Rigoli. High speed single pass inkjet printers are typically operated with piezo printing heads, for example available from Fujifilm Dimatix (e.g. SAMBA printing head), Kyocera, Toshiba, Ricoh, and Xaar, with continuous inkjet print heads, e.g. from Kodak, or with printing heads and printing bars, respectively, available from Memjet.

After printing, complete drying of the aqueous ink is necessary since neither the inventive primer layer nor the non-absorptive or low-absorptive substrates can absorb significant amounts of the water. Therefore, an active drying step, for example convective drying (in hot air), contact drying, IR drying, NIR drying or any combination thereof, typically at a temperature of at least 50 °C can be performed.

In case of a transparent coated substrate, it can be printed by either face printing or reverse printing. Face printing means that a non-mirror image is printed on the inkjet-printable primer layer. Also, reverse printing of the coated substrate is possible due to the high transparency of the inkjet-printable primer layer. Reverse printing means that a mirror image is printed on the inkjet-printable primer layer. A coated substrate is considered transparent when it has a haze of less than 15 %, more preferably less than 10 %, and most preferably less than 6 %, as determined according to ASTM D1003, Procedure A.

Typically, an aqueous (water-based) pigment-based ink is used for printing on the inventive inkjet-printable primer layer. A pigment-based ink comprises dispersed pigments, preferably anionically stabilized dispersed pigments. Pigments within the meaning of the present invention are color pigments. The pigments can be organic or inorganic pigments.

Moreover, the aqueous pigment-based ink can comprise a polymeric binder, preferably comprising a dissolved or dispersed anionic polymer or an anionically stabilized dispersed polymer. The polymeric binder is present for fixing the pigments and enhancing the anchorage of the pigments to the printed surface after printing and/or as surface modification of the pigments in order to achieve a stable dispersion. For the interaction with the inventive aqueous coating composition, inks comprising an anionic or anionically stabilized binder polymer are preferred. The anionic or anionically stabilized binder polymer can be a dispersed anionic polyurethane, a polyurethane dispersed with an anionic surfactant, or a dispersed anionic (meth)acrylic polymer or copolymer such as an anionic styrene-(meth)acrylate copolymer. Typically, the binder polymer is contained in the pigment-based ink in an amount of from 1 to 25 % by weight, preferably from 3 to 15 % by weight, based on the solids content of the ink. Alternatively, an aqueous pigment-based ink can also be formulated without a polymeric binder.

Further ink ingredients include dispersants (surfactants and polymers), humectants and/or cosolvents to retard premature drying and prevent from inkjet nozzle-clogging, defoamers and antifoaming agents, wetting agents to enhance contact with the substrate, pH modifiers (usually amine derivatives) and biocides and bacteriostats. In commercial aqueous pigment-based inks, there is a very large variance of ink components including a wide choice of the type of pigments and dispersants. In particular, the type and content of different cosolvents and humectants or mixtures thereof can differ significantly. Examples for suitable cosolvents and humectants are: alkanols (such as methanol, ethanol, n-propanol, isopropanol, n-butanol, sec-butanol, tert-butanol, n-pentanol, cyclopentanol and cyclohexanol), linear amides (such as dimethylformamide or dimethylacetamide), ketones and ketone-alcohols (such as acetone, methyl ether ketone, cyclohexanone and diacetone alcohol), diols (such as ethylene glycol, propylenegylcol, diethylene glycol, 1,2-hexanediol, 1,5-pentanediol, triethylene glycol, tetraethylene glycol); triols (such as glycerol, 1 ,2,6-hexanetriol), ethers of diols (such as 2-methoxyethanol, 2-(2- methoxyethoxy)ethanol, 2-(2-ethoxyethoxy)-ethanol, 2-[2-(2-methoxyethoxy) ethoxyethanol, 2-[2-(2-ethoxyethoxy)-ethoxy]-ethanol, ethyleneglycol monoallylether, tetraethylenglycoldimethylether), ethers (such as tetrahydrofuran and dioxane), cyclic esters (such as caprolactone), sulfoxides (such as dimethyl sulfoxide) and sulfolane.

Mostly, a four ink CMYK (cyan, magenta, yellow, and black) system is used for printing on the inventive inkjet-printable primer layer. However, special colors, e.g. blue, green, orange, red and particularly white or silver, may be used as well.

The inventive aqueous coating composition results in an inkjet-printable primer layer that provides a high printing quality when subjected to inkjet printing with pigmented inks. The inkjet-printable primer layer receives the ink droplets resulting in an appropriate contact angle to ensure defined and appropriate dot sizes. The stabilized ink pigments and stabilized optional polymeric binder are instantly chemically destabilized by interaction with the multivalent metal cations, cationic groups, if present on the binder polymer in the primer layer, and protons, if present in the primer layer. The inventive inkjet-printable primer layer quickly fixes the applied ink droplets on its surface and ensures defined dots of the ink although the ink is still in a liquid stage (not yet dried). Dot sizes that are not too small for printing with high speed in single-pass printing are achieved, i.e. a streaky print image, which would be caused by too small dots, is avoided. Ink-receiving rates of up to 10 ml/m²s or up to 20 ml/m²s can be reached. Thus, the aqueous coating composition of the present invention is ideal for high speed inkjet printing because it provides instant fixation of the ink pigments and optionally of the ink binder to achieve appropriate dot sizes. A high printing quality can be obtained meaning high image resolution, a high color gamut, color saturation and color brilliance without any print artifacts such as streakiness, bleeding, blurring, coalescence and mottling. The inkjet printing quality achieved with the present aqueous coating composition and suitable inks often exceeds that of conventional flexographic and intaglio printing. Good adhesion of the inventive primer layer to the substrate and the applied ink after drying is also provided. With the inventive aqueous coating composition, a perfect compromise between adhesion of the printed pigments to the primer layer, the adhesion of the primer layer to the non- or low-absorptive substrate, and the availability of the polyvalent metal cation on the surface of the primer layer, i.e. the immediate release of the polyvalent metal cation to the printed interface to contact the just landed ink dot on the primer surface in order to achieve high print quality, is achieved. A tack-free surface of the primer layer after printing and drying is also obtained. This enables roll-to-roll processing of the printed coated substrate without material blocking. This is particularly important if no additional overprint varnish is applied inline after printing and drying of the ink. Nevertheless, an overprint varnish can be applied to the printed primer layer to protect the printed surface and/or to modify the surface properties.

Moreover, the inkjet-printable primer layer of the present invention is scratch and rub resistant, both before and after being printed. It is further characterized by a good water resistance and can provide these properties to suitable printed inks.

In order to achieve optimum printing results the aqueous coating composition of the present invention must be adapted to the specific printing ink. This means that the mixing ratio of the individual components polymeric binder (a), aluminum hydroxide oxide (b), multivalent metal cations (c) and optional water-soluble polymeric binder (e) must be adapted to the specific ink. This also applies to the type of polymeric binder (a), the type of multivalent metal cations (c) and counteranions (d) as well as to the dry coating weight of the primer layer formed form the aqueous coating composition.

### Commercial applications

The aqueous coating composition of the present invention is useful for different applications. As described before it can be applied to a wide variety of non-absorptive or low-absorptive substrates offline or inline in an inkjet printing machine. Preferably, the aqueous coating composition is useful in packaging and décor applications on films and film laminates as well as impregnated or precoated paper with low-absorbing surfaces, e.g. for food packaging films, décor films, coated wallpapers, and impregnated décor papers.

In further converting steps the printed coated substrate may be laminated with polymer films or polymer film laminates, papers, metal foils, or laminates comprising metal foils or it may be embossed.

The present coating composition is particularly applicable to prepare inkjet-printable primer layers for high-speed single pass printing in décor paper and décor film applications. Décor papers are special papers with high filler content, high opacity and may be preimpregnated with melamine/melamine formaldehyde or urea resins as roll-to-roll printing substrates which are subsequently converted to rigid materials by application to a rigid substrate. For a décor application, the printed primer layer needs to be protected in most cases; it is typically over-varnished by a radiation curable coating(s) which are then crosslinked by UV light or electron beam curing. Afterwards, the unprinted side of the décor paper or film is bound to a rigid substrate. As rigid substrates high pressure laminates (HPL), particle board, veneer, medium density fiberboard (MDF), chipboard, particleboard or even metal can be used. Alternative to applying an overvarnish, the printed primer layer can be protected by lamination with films, e.g. by using adhesives and/or heat pressing, by extrusion lamination of polymers, e.g. polyurethanes, depending on the final application.

If intended for food packaging, the aqueous coating composition and the aqueous pigmented ink applied must be safe for use on food packaging, i.e. they must not contain substances which migrate through the layers of a substrate, e.g. a film or film laminate, into a packaged good leading to non-compliant food. Preferably, aqueous inks with a low tendency for migration are used for printing, more preferably pigment-based inks comprising food-compliant humectants, such as glycerol, 1,2-propane diol, 1,3-propane diol, 1,3-butane diol, poly(ethylene glycol), and poly(propylene glycol) are used.

### EXAMPLES

### Reagents

Pseudoboehmite powder: surface-modified (acidic), water dispersible pseudo-boehmite corresponding to AIO(OH) ·0.15 H₂O, having a specific surface area of 140 m²/g after drying 110°C for 2 hours, a pore volume of 0.82 cm³/g, an HNO₃ acid content (pH = 4.0 of a 30 % dispersion), and a dispersibility of > 96 % in water.

Boehmite powder: DISPERAL^{®} HP14, acid-dispersible boehmite with high porosity with a median particle size of the powder of 35 µm, a dispersed particle size of 100 nm (10 % by weight dispersion in 0.4 % by weight HNO₃), a crystallite size of 14 nm [120] and a dispersibility of 98 % (10 % by weight dispersion in 0.4 % by weight HNO₃), available from Sasol
Hydrochloric acid in a concentration of 13 % by weight
Calcium chloride: hydrated form with 77 % by weight of calcium chloride
Magnesium chloride: hydrated form with 47 % by weight of magnesium chloride
Levasil^{®} CC310 (former name Bindzil CC310): with (3-glycidyloxypropyl)trimethoxysilane modified anionic colloidal silica dispersion with a solids content of 28 % by weight, available from Nouryon Chemicals B.V.
Baybond^{®} PU 404: non-ionic polyester urethane dispersion with a solids content of 50 % by weight, a pH of 5.5 - 7.5, a MFFT of < 0° C, and a mean particle size (Dᵥ₅₀) of 135 nm, available from Covestro
Neorez^{®} R-9340: non-ionic polyester urethane dispersion with a solids content of 40 % by weight, a pH of 6.5-7.5, a MFFT of < 5 °C, and a mean particle size (Dᵥ₅₀) of 140 nm, available from Covestro
Neocryl^{®} XK-30: cationic acrylic dispersion with a solids content of 42 % by weight, a pH of 4.0, a MFFT of 30 °C, and a mean particle size (Dᵥ₅₀) of 150 nm, available from Covestro
Esacote^{®} PU 4045: anionic aliphatic polyurethane dispersion with a solids content of 35 % by weight, a pH of 7.0 - 9.5, a MFFT of about 0° C, and a mean particle size (Dᵥ₅₀) of 110 nm, available from Lamberti
Esacote^{®} PU C1: cationic dispersion of an aliphatic polyurethane based on polycarbonate diols with a solids content of 30 % by weight, a pH of 4 - 6, a MFFT of appr. 0°C, and a mean particle size (Dᵥ₅₀) of 180 nm, available from Lamberti
Kuraray Poval^{®} 30/92: high molecular weight poly(vinyl alcohol) with a saponification degree of 92 %, available from Kuraray, Japan
Surfynol^{®} 420: ethoxylated acetylenic surfactant that provides dynamic wetting and molecular defoaming properties, available from Evonik Operations GmbH, Germany

### Preparation of aluminum hydroxide oxide dispersions

### Pseudoboehmite dispersion

18.4 kg of a water dispersible pseudoboehmite powder (including about 2 % by weight of adsorbed water) were added to 58 kg of water and stirred for 3 hours in order to obtain a 23.6 % by weight solids content dispersion of pseudoboehmite particles. The pH of the dispersion was adjusted to 3.8 by adding hydrochloric acid. The mean dispersed particle size (Dᵥ₅₀) as measured by laser diffraction was 128 nm.

### Boehmite dispersion

18.6 kg of boehmite powder (including about 4 % by weight of adsorbed water) and 0.9 kg of hydrochloric acid were added to 56.8 kg of water and stirred for 3 hours in order to obtain a 23.6 % by weight solids content dispersion of boehmite particles. The median particle size (Dᵥ₅₀) as measured by laser diffraction was 137 nm.

### Preparation of aqueous coating compositions

### Coating Composition A

2.4 kg of calcium chloride dihydrate were dissolved in 100 kg of water. The pH of the solution was adjusted to 3.8 by adding hydrochloric acid. Then the pseudoboehmite dispersion (76.4 kg) was added to the calcium chloride solution. 41 kg of Baybond^{®} PU 404 dispersion were slowly poured into the premix of pseudoboehmite and calcium chloride while stirring the mix. Into this mix 0.6 kg of Surfynol^{®} 420 surfactant were slowly added. The pH of the aqueous coating composition was adjusted to 3.8 by adding hydrochloric acid and the solids content was adjusted to 18 % by weight by adding water.

It can be calculated that Coating Composition A comprises in its solids content 44 % by weight of pseudoboehmite particles, 50 % by weight of polyurethane particles, and 1.6 % by weight of calcium ions.

### Coating Compositions B to H and Comparative Coating Compositions I to M

Coating Compositions B to H and Comparative Coating Compositions I to M were prepared similar to Coating Composition A with the respective components replaced or omitted as indicated in Table 1. In Table 1 the solid portions of the added components are given in % by weight, based on the solids content of the aqueous coating compositions.

In Coating Composition B the polyurethane dispersion was partly replaced with Kuraray Poval^{®} 30/92 poly(vinyl alcohol) which was added as a 10 % by weight aqueous solution before adding the polyurethane dispersion. In Comparative Composition J the 10 % by weight poly(vinyl alcohol) solution was added as the sole polymeric binder.

**Table 1: Components of aqueous coating compositions**

| | | Inventive Coating Compositions | | | | | | | |
|---|---|---|---|---|---|---|---|---|---|
| Coating composition # | | A | B | C | D | E | F | G | H |
| Calcium chloride (hydration water not included in amount) | multivalent metal cations (c) + counteranions (d) | 4.5 | 4.5 | | 4.5 | 4.5 | 4.5 | 4.5 | 2 |
| Magnesium chloride (hydration water not included in amount)) | multivalent metal cation (c) + counteranion (d) | | | 4.5 | | | | | |
| Pseudoboehmite | aluminum hydroxide oxide particles (b) | 44 | 44 | 44 | | | | 44 | 25 |
| Boehmite | aluminum hydroxide oxide particles (b) | | | | 44 | 44 | 44 | | |
| Levasil^{®} CC310 | anionic silica particles | | | | | | | | |
| Baybond^{®} PU 404 | non-ionic polyurethane particles (a) | 50 | 45 | 50 | 50 | | | | |
| Neorez^{®} R-9340 | non-ionic polyurethane particles (a) | | | | | 50 | | | 71.5 |
| Neocryl^{®} XK-30 | cationic polyacrylate particles (a) | | | | | | 50 | | |
| Esacote^{®} PU 4045 | anionic polyurethane particles (a) | | | | | | | | |
| Esacot^{®}e PU C1 | cationic polyurethane particles (a) | | | | | | | 50 | |
| Kuraray Poval^{®} 30/92 | water soluble polymeric binder (e) | | 5 | | | | | | |
| Surfynol^{®} 420 | surfactant | 1.5 | 1.5 | 1.5 | 1.5 | 1.5 | 1.5 | 1.5 | 1.5 |
| | | 100 | 100 | 100 | 100 | 100 | 100 | 100 | 100 |
| Content of cations | | 1.6 | 1.6 | 1.2 | 1.6 | 1.6 | 1.6 | 1.6 | 0.8 |
| Mixing stability | | good | good | good | good | good | good | good | good |

**Table 1: Components of aqueous coating compositions (continued)**

| | | Comparative Coating Compositions | | | | |
|---|---|---|---|---|---|---|
| Coating composition # | | I | J | K | L | M |
| Calcium chloride (hydration water not included in amount) | multivalent metal cations (c) + counteranions (d) | 4.5 | 4.5 | 4.5 | | 2 |
| Magnesium chloride (hydration water not included in amount) | multivalent metal cations (c) + counteranions (d) | | | | | |
| Pseudoboehmite | aluminum hydroxide oxide particles (b) | | 84 | | | |
| Boehmite | aluminum hydroxide oxide particles (b) | | | 44 | 45.5 | |
| Levasil^{®} CC310 | anionic silica particles | | | | | 25 |
| Baybond^{®} PU 404 | non-ionic polyurethane particles (a) | 94 | | | 53 | |
| Neorez^{®} R-9340 | non-ionic polyurethane particles (a) | | | | | 71.5 |
| Neocryl^{®} XK-30 | cationic polyacrylate particles (a) | | | | | |
| Esacote^{®} PU 4045 | anionic polyurethane particles (a) | | | 50 | | |
| Esacote^{®} PU C1 | cationic polyurethane particles (a) | | | | | |
| Kuraray Poval^{®} 30/92 | water soluble polymeric binder (e) | | 10 | | | |
| Surfynol^{®} 420 | surfactant | 1.5 | 1.5 | 1.5 | 1.5 | 1.5 |
| | | 100 | 100 | 100 | 100 | 100 |
| Content of cations | | 1.6 | 1.6 | 1.6 | 0 | 0.73 |
| Mixing stability | | good | good | precipitated | good | good |

### Example 1

Coating Composition A was coated onto a white 100 µm thick BOPET film (Type Melinex^{®} 339, comprising a thin polyacrylate coating on both surfaces, having a gloss of 65 GU, available from Dupont Teijin Film) from roll-to-roll with a dry coating weight of 2 g/m² by a Meyer rod coating system and dried at oven temperatures of 80°C maximum. The coating was tack free and the coated roll could be rewound without any blocking.

Afterwards, the coated film was printed with a 4 Color (CMYK) Epson inkjet printer (type Ecotank ET-2720) which was not equipped with an Epson ink but with a commercially available aqueous pigmented ink comprising color pigments, anionic polymeric binder and about 40 %by weight of propanediol-1,2 (Ink 1) or with aqueous pigmented DuraFlex^{®} inks from Memjet (Ink 2) not comprising binder and comprising triethylene glycol, 2-(2-butoxyethoxy) ethanol, glycerol in an overall concentration of about 15 % by weight. After printing the ink fluid stayed on the surface of the coated film while the ink pigments and ink binder, if present, were precipitated. The print was transferred to a lab oven and dried at 60 °C for 45 min.

### Examples 2 to 11

In Examples 2 to 11 the BOPET film was coated and printed as described for Example 1 but using different dry coating weights (Example 2 and 3) and Coating Compositions B to H (Examples 4 to 11) as indicated in Table 2.

### Comparative Examples 12 to 16

In Comparative Examples 12 to 16 the BOPET film was coated and printed as described for Example 1 but using Comparative Coating Compositions I, J, L and M to achieve the respective dry coating weights as indicated in Table 2.

### Applied test methods

The coated or coated and printed samples were examined according to the test methods below and the results are reported in Table 2.

The dry coating weight of the primer layer was determined by weight difference of the coated and uncoated substrate.

The gloss of the dried primer layer on the base material was determined according to ISO 2813:2014 at an angle of 60° in GU.

The tackiness of the dried primer layer, i.e. the tendency to block, was evaluated by stacking the coated side of the substrate to the backside of another substrate under a pressure of 70 g/cm² for 24 hours in a climate chamber at 60 °C and 80 % r.h. Thereafter, the stack of the coated substrates was transferred into a standard climate (23°C, 50% r.h.). After cooling down, the stack was separated manually. The primer layers were inspected visually and rated as follows:
1 primer layer adheres to the backside of the other substrate, separation under force leads to damage of the entire primer layer
2 force must be applied to separate the layers, separation noise may be present, the surface of the primer shows traces or damage and/or there is slight transfer of the primer coating to the backside of the other substrate
3 blocking/ separating force is noticeable, separation noise may be present, slight marks on the primer surface
4 slight local blocking, minimal marks on the primer surface
5 no blocking, no adhesion, no marks on the primer surface.

The rub, scratch and adhesion tests were performed according to Finat Test Methods No. 21 (FTM 21) in a standard climate (23 °C and 50% r.h.).

The rub test was performed by sliding a fingertip under pressure 5 times back and forth over the surface of the unprinted and printed primer layer (homogeneously red printed area). The primer layers were inspected visually and rated as follows:
unprinted primer layer:
   1 coating is completely rubbed off
   2 coating is only partially rubbed off
   3 clearly visible traces, marks, no rub-off
   4 slightly visible traces, marks, no rub-off
   5 no surface change visible
printed primer layer:
   1 coating and ink are rubbed off, at least in part
   2 printed ink can be rubbed off / smudged completely
   3 printed ink can be rubbed off / smudged partially
   4 slight smudging of the printed ink
   5 no visible traces or marks

The scratch test was performed on a hard, smooth, stable table at a 60° angle with respect to the surface of the table by sliding the edge of a 1 Euro coin manually under light pressure 5 times back and forth over the surface of the unprinted and printed primer layer (homogeneously blue printed area). The surface of the coin was oriented in the direction of movement. The primer layers were inspected visually and rated as follows:
unprinted primer layer:
   1 primer layer comes off in the complete scratch area
   2 severe/significant tracks with primer layer removal
   3 scratches on the surface and slight primer layer removal detectable
   4 significant scratches on the surface visible
   5 only slight scratching of the surface - not deep.
printed primer layer:
   1 ink and primer layer come off in the complete scratch area
   2 severe/significant tracks with ink and primer layer removal
   3 severe scratches, white traces in the printed surface
   4 scratches/slight white traces on the printed surface visible
   5 no color defect/no white traces visible, only impressions detectable

The adhesion of printed areas is evaluated with an adhesive tape Tesa film 4101 from Tesa SE, Germany. The results were rated as follows:
1 primer layer and ink come off, adhesion issue of the layer to the substrate
2 ink comes off together with parts of the primer layer, split in the primer layer, cohesion issue of the primer layer
3 ink comes off to a large extent, adhesion issue of the ink to the primer layer
4 only slight transfer of the ink to the tape
5 no significant transfer of ink to the tape.

The dot diameter of single cyan dots in the test prints was measured with a laser scanning microscope from Keyence type VK-9710 using the combined image of laser and visible spectrum light.

The print performance was rated visually: It was judged for general color impression/color gamut, intercolor bleeding + color bleeding (bleeding of the colored areas into each other + bleeding of colored areas into unprinted areas), print sharpness (small printed characters, fine lines), and coalescence (In inkjet printing coalescence or puddling is an image defect that occurs when adjacent wet ink drops merge on the receiver surface, combining into larger drops before the ink pigments precipitate. This causes images to appear blotchy or 'puddled', resulting in non-uniformity in solid fill areas.)
general color impression/color gamut:
   1 pale, dull, matte, stained and/or dirty colors, cracking of the printed surface, massive color deviations in single, secondary or tertiary colors
   2 pale, dull, matte and/or slightly stained colors, cracking of the printed surface visible under magnification, slight color deviations in single, secondary or tertiary colors
   3 noticeable pale, dull and matte, tends to be stained
   4 vivid colors but slightly dull, not stained
   5 highly brilliant colors, high gloss
print sharpness:
   1 tiny printed characters not legible and not recognizable, fine lines blurred or merged together
   2 small printed characters seriously blurred but recognizable
   3 all small characters and fine lines are legible and recognizable but slightly blurred
   4 good sharpness,
   5 excellent sharpness
coalescence:
   1 solid filled printed areas are not uniform, they appear puddled
   2 only solid filled printed areas of secondary and tertiary colors are not uniform, they appear puddled
   3 only solid filled areas of printed areas with high ink load/tertiary colors are not uniform, they appear puddled
   4 only minimal coalescence
   5 no coalescence
intercolor bleeding + color bleeding:
   1 colors bleed strongly into each other and/or colors bleed strongly into unprinted areas
   2 colors run into each other and/or into unprinted areas in a clearly recognizable manner
   3 colors of areas with very high ink load run into each other and/or into unprinted areas in a clearly recognizable manner
   4 only slight bleeding of colors of areas with high ink load, identifiable only under magnification
   5 no bleeding.

A rating of 3 is judged as sufficient for most applications.

**Table 2: Properties of the unprinted and printed primer layers**

| | | **Inventive Examples** | | | | | | | | |
|---|---|---|---|---|---|---|---|---|---|---|
| Example # | | **1** | **2** | **3** | **4** | **5** | **6** | **7** | **8** | **9** |
| Coating composition # | | **A** | **A** | **A** | **B** | **C** | **D** | **E** | **F** | **G** |
| Dry Coat weight (g/m²) | | 1.6 | 3 | 5.9 | 2.5 | 2.6 | 2.6 | 2.4 | 2.3 | 2.5 |
| Gloss (GU) | | 71 | 71 | 67 | 54 | 66 | 63 | 66 | 68 | 71 |
| Tackiness/blocking | | 4 | 4 | 4 | 5 | 4 | 5 | 4 | 4 | 3 |
| Scratch test unprinted | | 4 | 4 | 4 | 5 | 4 | 4-5 | 4 | 3 | 5 |
| Rub Test unprinted | | 3 | 3 | 4 | 4 | 3 | 3 | 4 | 3 | 4 |

| Ink 1: Print performance | | | | | | | | | | |
|---|---|---|---|---|---|---|---|---|---|---|
| | General color impression/color gamut | 5 | 5 | 5 | 5 | 5 | 5 | 5 | 5 | 5 |
| | Intercolor bleeding + color bleeding | 5 | 5 | 5 | 5 | 5 | 5 | 5 | 5 | 5 |
| | Print sharpness | 5 | 5 | 5 | 5 | 5 | 5 | 5 | 5 | 5 |
| | Coalescence | 5 | 5 | 5 | 5 | 5 | 5 | 5 | 5 | 5 |
| Adhesion of printed areas | | 5 | 5 | 5 | 5 | 5 | 5 | 5 | 5 | 5 |
| Rub test printed | | 4 | 4 | 4 | 4 | 3 | 3 | 3 | 4 | 4 |
| Scratch test printed | | 5 | 4-5 | 5 | 4-5 | 3 | 4 | 5 | 4 | 3 |
| Dot diameter (µm) | | 41 | 40 | 40 | 37 | 39 | 41 | 38 | 38 | 39 |

| Ink 2: Print performance | | | | | | | | | | |
|---|---|---|---|---|---|---|---|---|---|---|
| | General color impression/color gamut - | 4 | 4 | 4 | 5 | 4 | 4 | 4 | 4 | 5 |
| | Intercolor bleeding + color bleeding | 3 | 4 | 5 | 5 | 4 | 5 | 4 | 4 | 5 |
| | Print sharpness | 3 | 4 | 4 | 5 | 4 | 5 | 5 | 4 | 5 |
| | Coalescence | 5 | 5 | 5 | 5 | 4 | 5 | 5 | 5 | 5 |
| Adhesion of printed areas | | 3 | 5 | 5 | 4 | 4 | 4 | 4 | 3 | 4 |
| Scratch test printed | | 5 | 4-5 | 5 | 4-5 | 3 | 4 | 5 | 4 | 3 |

**Table 2: Properties of the unprinted and printed primer layers (continued)**

| | | **Inventive Examples** | | | **Comparative Examples** | | | | |
|---|---|---|---|---|---|---|---|---|---|
| Example # | | **10** | **11** | | **12** | **13** | **14** | **15** | **16** |
| Coating composition # | | **H** | **H** | | **I** | **J** | **L** | **M** | **M** |
| Dry Coat weight (g/m²) | | 1.2 | 2.6 | | 1.8 | 2 | 1.9 | 1.2 | 2.6 |
| Gloss (GU) | | 84 | 85 | | 83 | 42 | 70 | 90 | 89 |
| Tackiness/blocking | | 3 | 3 | | 1 | 5 | 5 | 2 | 2 |
| Scratch test unprinted | | 4 | 4 | | 3 | 2 | 3 | 4 | 4 |
| Rub test unprinted | | 5 | 5 | | 1 | 5 | 5 | 4 | 5 |

| Ink 1: Print performance | | | | | | | | | |
|---|---|---|---|---|---|---|---|---|---|
| | General color impression/color gamut - | 5 | 5 | | 3, tends to be stained and dull | 5 | no ink fixation at all | 2 | 2 |
| | Intercolor bleeding + color bleeding | 5 | 4 | | 5 | 5 | | 5 | 5 |
| | Print sharpness | 5 | 5 | | 4 | 5 | | 5 | 5 |
| | Coalescence | 5 | 5 | | 3 | 5 | | 4 | 5 |
| Adhesion of printed areas | | 5 | 5 | | 5 | 2 | | 5 | 5 |
| Rub test printed | | 4 | 3 | | 2 | 4 | | 4 | 4 |
| Scratch test printed | | 4-5 | 4-5 | | 3 | 5 | | 4 | 4 |
| Dot diameter (µm) | | 40 | 41 | | 43 | 41 | 88 | 37 | 38 |

| Ink 2: Print performance | | | | | | | | | |
|---|---|---|---|---|---|---|---|---|---|
| | General color impression/color gamut - | 4 | 4 | | 4 | 3, tends to be stained and dull | no ink fixation at all | 3, clearly pale and dull | 4 |
| | Intercolor bleeding + color bleeding | 1 | 5 | | 2 | 5 | | 2 | 5 |
| | Print sharpness | 5 | 5 | | 2 | 5 | | 4 | 5 |
| | Coalescence | 5 | 5 | | 2 | 5 | | 4 | 5 |
| Adhesion of printed areas | | 5 | 4 | | 2 | 2 | | 4 | 5 |
| Scratch test printed | | 4-5 | 4-5 | | 3 | 5 | | 3 | 4 |

Antiblocking performance, scratch and rub resistance as well as adhesion are acceptable to very good for all inventive examples. Dot sizes are appropriate. The inventive examples further show very good print performance for Ink 1 and still acceptable to very good print performance for Ink 2. The difference in print performance is mostly due to the type and content of cosolvents which differ significantly for Inks 1 and Ink 2. Although the tested inventive aqueous coating composition are considered optimal for Ink 1, satisfactory print results can also be achieved with Ink 2.

Comparative Example 12 (not containing aluminum hydroxide oxide particles) shows high tackiness and a low rub resistance. Print performance is worse with both Ink 1 and Ink 2. Comparative Example 13 (only water-soluble polymeric binder) shows a low scratch resistance for the unprinted primer layer and a low adhesion of printed areas. Print performance with Ink 2 is inferior as regards general color impression/color gamut. In Comparative Example 14 (not containing calcium chloride) no fixation of the ink could be achieved. Comparative Example 15 which corresponds to Example 10 with the only difference that the pseudoboehmite particles were replaced with silica particles shows considerable tackiness which would lead to undesirable blocking in a roll-to-roll process. The print performance with Ink 1 is significantly worse than in Example 10 as regards general color impression/color gamut. With Ink 2, both Example 10 and Comparative Example 15 have issues with intercolor bleeding and color bleeding which is due to the low coating weight of only 1.2 g/m². In Example 11/Comparative Example 16 the coating weight was increased to 2.6 g/m² and the problems with bleeding disappeared. However, in Comparative Example 16 the general color impression/color gamut with Ink 1 is still inacceptable.

## Claims

1. An aqueous coating composition comprising
(a) from 20 to 79 % by weight, preferably from 30 to 69 % by weight, more preferably from 35 to 64 % by weight, and most preferably from 40 to 59 % by weight, of a dispersed polymeric binder,
(b) from 20 to 79 % by weight, preferably from 30 to 69 % by weight, more preferably from 35 to 64 % by weight, and most preferably from 40 to 59 % by weight, of aluminum hydroxide oxide particles,
(c) from 0.1 to 10% by weight, preferably from 0.3 to 5 % by weight, more preferably from 0.5 to 2 % by weight, of dissolved multivalent metal cations, and
(d) inorganic and/or organic counteranions of the metal cations,
wherein the weight percentages are based on the solids content of the aqueous coating composition.

2. The aqueous coating composition according to claim 1, wherein the aluminum hydroxide oxide particles are selected from boehmite particles, pseudoboehmite particles, and combinations thereof and/or have a median particle size (Dᵥ₅₀) of from 20 to 500 nm, preferably from 30 nm to 300 nm, more preferably from 50 nm to 200 nm, and most preferably from 80 to 180 nm as determined by laser diffraction according to ISO 13320:2020-01.

3. The aqueous coating composition according to claims 1 or 2, wherein the dispersed polymeric binder (a) comprises non-ionically stabilized polymer particles or cationic polymer particles such as non-ionically stabilized polyurethane particles, cationic polyurethane particles, non-ionically stabilized poly(meth)acrylate particles, cationic poly(meth)acrylate particles, or combinations thereof, preferably non-ionically stabilized polyurethane particles, cationic polyurethane particles, or combinations thereof.

4. The aqueous coating composition according to any of claims 1 to 3, wherein the multivalent metal ions (c) are selected from Ca²⁺, Mg²⁺, Zn²⁺, Al³⁺, Fe²⁺, Fe³⁺, Ti⁴⁺, Zr⁴⁺, and combinations thereof, preferably from Ca²⁺, Mg²⁺, Al³⁺, and combinations thereof and/or the counteranions (d) are selected from chloride, bromide, borate, nitrate, hydrogensulfate, sulfate, hydrogencarbonate, acetate, formate, propionate, sulfamate, succinate, citrate, lactate, glycerate, p-toluolsufonate, and combinations thereof, preferably from chloride, acetate, and combinations thereof.

5. The aqueous coating composition according to any of claims 1 to 4 further comprising a water-soluble polymeric binder (e) such as poly(vinyl alcohol), preferably having a degree of hydrolysis of from 78 to 99 mol %, replacing from > 0 to 50 % by weight, preferably from 2 to 25 % by weight of the dispersed polymeric binder (a), based on solids.

6. The aqueous coating composition according to any of claims 1 to 5 further comprising an acidic dispersing agent (f) preferably being an organic and/or inorganic acid having a pkₐ value of less than 5.0, preferably less than 4.9, more preferably less than 4.0, even more preferably less than 3.0, and most preferably less than 2.0, such as being selected from HCl, HBr, HNO₃, formic acid, acetic acid, propionic acid, lactic acid, citric acid, sulfamic acid, and any combinations thereof, in an amount of from > 0 to 10 % by weight, preferably from 0.2 to 5 % by weight, more preferably from 0.3 to 1 % by weight, based on the amount of the aluminum hydroxide oxide particles (a).

7. A substrate at least partially coated with the aqueous coating composition according to any of claims 1 to 6 forming an inkjet-printable primer layer, preferably having a dry coating weight of from 0.3 to 8.0 g/m², more preferably of from 0.5 to 6.0 g/m², even more preferably from 0.8 to 5.0 g/m², and most preferably from 1.3 to 4.0 g/m².

8. The coated substrate according to claim 7, wherein the substrate is a non-absorptive substrate or low-absorptive substrate selected from polymer films including polymer film laminates preferably comprising a polyolefin, such as polypropylene, e.g. cast polypropylene (cPP) and biaxially oriented polypropylene (BOPP), and polyethylene, polystyrene, a polyester such as poly(ethylene terephthalate) (PET, APET), e.g. biaxially oriented poly(ethylene terephthalate) (BOPET), or a polyamide; paper or cardboard coated or laminated with polymeric layers, e.g. both side resin coated photo base paper; metal foils; substrates coated or laminated with metallic layers; glass substrates; ceramic substrates such as tiles; barrier papers; highly sized or coated or impregnated papers or carboards, such as wallpapers, décor papers, and liners for corrugated boards; coated canvas; and coated wovens or non-wovens.

9. The coated substrate according to claims 7 or 8, wherein the inkjet-printable primer layer formed from the aqueous coating composition is the single inkjet-printable layer and/or is in direct contact with the substrate.

10. A method for coating a substrate comprising applying the aqueous coating composition according to any of claims 1 to 6 to the substrate to obtain an inkjet-printable primer layer, preferably having a dry coating weight of from 0.3 to 8.0 g/m², more preferably from 0.5 to 6.0 g/m², preferably from 0.8 to 5.0 g/m², and most preferably from 1.3 to 4.0 g/m², wherein preferably the aqueous coating composition is directly applied to the substrate and/or the inkjet-printable primer layer formed from the aqueous coating composition is the single inkjet-printable layer applied.

11. The method according to claim 10, further comprising an active drying step, such as convective drying, contact drying, IR drying, NIR drying, or any combination thereof.

12. The method of according to claim 10 or 11, wherein the substrate is defined as in claim 8.

13. A method for preparing an inkjet-printed coated substrate, comprising the steps of:
(i) preparing a coated substrate by the method according to any of claims 10 to 12, and
(ii) printing the inkjet-printable primer layer of the coated substrate obtained in step (i) by a water-based inkjet-printing process preferably by a high-speed printing process such as with printing speeds from 5 to 300 m/min or from 30 or 60 to 300 m/min, more preferably by a single pass printing process.

14. The method according to claim 13, wherein the aqueous ink used in the water-based inkjet-printing process is an aqueous pigment-based ink, preferably comprising anionically stabilized dispersed pigments.

15. The method according to claims 13 or 14, wherein the aqueous pigmented ink comprises a polymeric binder, preferably comprising a dissolved or dispersed anionic polymer or an anionically stabilized dispersed polymer, more preferably comprising a dispersed anionic polyurethane, a polyurethane dispersed with an anionic surfactant, a dispersed anionic (meth)acrylic polymer or a dispersed anionic (meth)acrylic polymer or copolymer such as an anionic styrene-(meth)acrylate copolymer.

16. Use of the aqueous coating composition according to any of claims 1 to 6 for coating a non-absorptive or low-absorptive substrate to obtain an inkjet-printable primer layer, preferably having a dry coating weight of from 0.3 to 8.0 g/m², more preferably of from 0.5 to 6.0 g/m², even more preferably from 0.8 to 5.0 g/m², and most preferably from 1.3 to 4.0 g/m².

17. Use according to claim 16, wherein the inkjet-printable primer layer is the single inkjet-printable layer.

## Patentansprüche

1. Wässrige Beschichtungszusammensetzung, enthaltend
(a) 20 bis 79 Gew.-%, vorzugsweise 30 bis 69 Gew.-%, bevorzugter 35 bis 64 Gew.-% und am meisten bevorzugt 40 bis 59 Gew.-% eines dispergierten polymeren Bindemittels,
(b) 20 bis 79 Gew.-%, vorzugsweise 30 bis 69 Gew.-%, bevorzugter 35 bis 64 Gew.-% und am meisten bevorzugt 40 bis 59 Gew.-% Aluminiumoxidhydroxidteilchen,
(c) 0,1 bis 10 Gew.-%, vorzugsweise 0,3 bis 5 Gew.-%, bevorzugter 0,5 bis 2 Gew.-% gelöste mehrwertige Metallkationen und
(d) anorganische und/oder organische Gegenanionen der Metallkationen,
wobei die Gewichtsprozentangaben auf den Feststoffgehalt der wässrigen Beschichtungszusammensetzung bezogen sind.

2. Wässrige Beschichtungszusammensetzung gemäß Anspruch 1, worin die Aluminiumoxidhydroxidteilchen ausgewählt sind aus Böhmitteilchen, Pseudoböhmitteilchen und Kombinationen davon und/oder eine mittlere Teilchengröße (Dᵥ₅₀) von 20 bis 500 nm, vorzugsweise von 30 nm bis 300 nm, bevorzugter von 50 nm bis 200 nm und am meisten bevorzugt von 80 bis 180 nm aufweisen, wie mittels Laserbeugung gemäß ISO 13320:2020-01 bestimmt.

3. Wässrige Beschichtungszusammensetzung gemäß Anspruch 1 oder 2, worin das dispergierte polymere Bindemittel (a) nichtionisch stabilisierte Polymerteilchen oder kationische Polymerteilchen, wie etwa nichtionisch stabilisierte Polyurethanteilchen, kationische Polyurethanteilchen, nichtionisch stabilisierte Poly(meth)acrylatteilchen, kationische Poly(meth)acrylatteilchen oder Kombinationen davon enthält, vorzugsweise nichtionisch stabilisierte Polyurethanteilchen, kationische Polyurethanteilchen oder Kombinationen davon.

4. Wässrige Beschichtungszusammensetzung gemäß einem der Ansprüche 1 bis 3, worin die mehrwertigen Metallionen (c) ausgewählt sind aus Ca²⁺, Mg²⁺, Zn²⁺, Al³⁺, Fe²⁺, Fe³⁺, Ti⁴⁺, Zr⁴⁺ und Kombinationen davon, vorzugsweise aus Ca²⁺, Mg²⁺, Al³⁺ und Kombinationen davon, und/oder die Gegenanionen (d) ausgewählt sind aus Chlorid, Bromid, Borat, Nitrat, Hydrogensulfat, Sulfat, Hydrogencarbonat, Acetat, Formiat, Propionat, Sulfamat, Succinat, Citrat, Lactat, Glycerat, p-Toluolsufonat und Kombinationen davon, vorzugsweise aus Chlorid, Acetat und Kombinationen davon.

5. Wässrige Beschichtungszusammensetzung gemäß einem der Ansprüche 1 bis 4, die ferner ein wasserlösliches polymeres Bindemittel (e), wie etwa Polyvinylalkohol, vorzugsweise mit einem Hydrolysegrad von 78 bis 99 Mol-%, enthält, das > 0 bis 50 Gew.-%, vorzugsweise 20 bis 25 Gew.-% des dispergierten polymeren Bindemittels (a), bezogen auf Feststoffe, ersetzt.

6. Wässrige Beschichtungszusammensetzung gemäß einem der Ansprüche 1 bis 5, die ferner ein saures Dispergiermittel (f), das vorzugsweise eine organische und/oder anorganische Säure mit einem pkₐ-Wert von weniger als 5,0, vorzugsweise weniger als 4,9, bevorzugter weniger als 4,0, noch bevorzugter weniger als 3,0 und am meisten bevorzugt weniger als 2,0 ist, wie etwa ausgewählt aus HCl, HBr, HNO₃, Ameisensäure, Essigsäure, Propionsäure, Milchsäure, Zitronensäure, Sulfaminsäure und Kombinationen daraus, in einer Menge von > 0 bis 10 Gew.-%, vorzugsweise von 0,2 bis 5 Gew.-%, bevorzugter von 0,3 bis 1 Gew.-%, bezogen auf die Menge der Aluminiumoxidhydroxidteilchen (a), enthält.

7. Substrat, das mindestens teilweise mit der wässrigen Beschichtungszusammensetzung gemäß einem der Ansprüche 1 bis 6 beschichtet ist, die eine mit Inkjet bedruckbare Primerschicht bildet, vorzugsweise mit einem Trockengewicht der Beschichtung von 0,3 bis 8,0 g/m², vorzugsweise von 0,5 bis 6,0 g/m², noch bevorzugter von 0,8 bis 5,0 g/m² und am meisten bevorzugt von 1,3 bis 4,0 g/m².

8. Beschichtetes Substrat gemäß Anspruch 7, wobei das Substrat ein nicht absorbierendes oder ein schwach absorbierendes Substrat ist, ausgewählt aus Polymerfolien, einschließlich Polymerfolienlaminaten, vorzugsweise enthaltend ein Polyolefin, wie etwa Polypropylen, z.B. gegossenes Polypropylen (cPP) und biaxial orientiertes Polypropylen (BOPP), und Polyethylen, Polystyrol, einen Polyester, wie etwa Polyethylenterephthalat (PET, APET), z.B. biaxial orientiertes Polyethylenterephthalat (BOPET), oder ein Polyamid; Papier oder Karton, beschichtet oder laminiert mit polymeren Schichten, z. B. beidseitig harzbeschichtetem Fotobasispapier; Metallfolien; Substraten, die mit metallischen Schichten beschichtet oder laminiert sind; Glassubstraten; keramische Substraten wie etwa Fliesen; Sperrpapieren; stark geleimten oder beschichteten oder imprägnierten Papieren oder Kartonagen, wie etwa Tapeten, Dekorpapieren und Linern für Wellpappen; beschichteter Leinwand und beschichteten Web- oder Vliesstoffen.

9. Beschichtetes Substrat gemäß Anspruch 7 oder 8, wobei die mit Inkjet bedruckbare Primerschicht, die aus der wässrigen Beschichtungszusammensetzung gebildet wird, die einzige mit Inkjet bedruckbare Schicht ist und/oder in direktem Kontakt mit dem Substrat ist.

10. Verfahren zur Beschichtung eines Substrats, umfassend Aufbringen der wässrigen Beschichtungszusammensetzung gemäß einem der Ansprüche 1 bis 6 auf das Substrat, um eine mit Inkjet bedruckbare Primerschicht zu erhalten, die vorzugsweise ein Trockengewicht der Beschichtung von 0,3 bis 8,0 g/m², bevorzugter von 0,5 bis 6. 0 g/m², vorzugsweise von 0,8 bis 5,0 g/m² und am meisten bevorzugt von 1,3 bis 4,0 g/m² aufweist, wobei vorzugsweise die wässrige Beschichtungszusammensetzung direkt auf das Substrat aufgebracht wird und/oder die mit Inkjet bedruckbare Primerschicht, die aus der wässrigen Beschichtungszusammensetzung gebildet wird, die einzige mit Inkjet bedruckbare Schicht ist, die aufgebracht wird.

11. Verfahren gemäß Anspruch 10, das ferner einen aktiven Trocknungsschritt, wie etwa konvektive Trocknung, Kontakttrocknung, IR-Trocknung, NIR-Trocknung oder irgendeine Kombination davon umfasst.

12. Verfahren gemäß Anspruch 10 oder 11, wobei das Substrat wie in Anspruch 8 definiert ist.

13. Verfahren zur Herstellung eines mit Inkjet bedruckten beschichteten Substrats, umfassend die folgenden Schritte:
(i) Herstellung eines beschichteten Substrats nach dem Verfahren gemäß einem der Ansprüche 10 bis 12 und
(ii) Bedrucken der mit Inkjet bedruckbaren Primerschicht des beschichteten Substrats, das in Schritt (i) erhalten wurde, mit einem wasserbasierten Inkjetdruckverfahren, vorzugsweise durch ein Hochgeschwindigkeitsdruckverfahren, wie etwa mit Druckgeschwindigkeiten von 5 bis 300 m/min oder von 30 oder 60 bis 300 m/min, bevorzugter mit einem Single-Pass-Druckverfahren.

14. Verfahren gemäß Anspruch 13, worin die wässrige Tinte, die in dem wasserbasierten Inkjetdruckverfahren verwendet wird, eine wässrige Tinte auf Pigmentbasis ist, die vorzugsweise anionisch stabilisierte dispergierte Pigmente enthält.

15. Verfahren gemäß Anspruch 13 oder 14, worin die wässrige pigmentierte Tinte ein polymeres Bindemittel enthält, das vorzugsweise ein gelöstes oder dispergiertes anionisches Polymer oder ein anionisch stabilisiertes dispergiertes Polymer enthält, bevorzugter ein dispergiertes anionisches Polyurethan, ein Polyurethan, das mit einem anionischen oberflächenaktiven Mittel dispergiert ist, ein dispergiertes anionisches (Meth)acrylpolymer oder ein dispergiertes anionisches (Meth)acrylpolymer oder -copolymer, wie etwa ein anionisches Styrol-(Meth)acrylat-Copolymer enthält.

16. Verwendung der wässrigen Beschichtungszusammensetzung gemäß einem der Ansprüche 1 bis 6 zur Beschichtung eines nicht absorbierenden oder schwach absorbierenden Substrats, um eine mit Inkjet bedruckbare Primerschicht zu erhalten, die vorzugsweise ein Trockengewicht der Beschichtung von 0,3 bis 8,0 g/m², bevorzugter von 0,5 bis 6,0 g/m², noch bevorzugter von 0,8 bis 5,0 g/m² und am meisten bevorzugt von 1,3 bis 4,0 g/m² aufweist.

17. Verwendung gemäß Anspruch 16, wobei die mit Inkjet bedruckbare Primerschicht die einzige mit Inkjet bedruckbare Schicht ist.

## Revendications

1. Composition de revêtement aqueux comprenant :
(a) de 20 à 79% en poids, de préférence de 30 à 69% en poids, plus préférablement de 35 à 64% en poids, et le plus préférablement de 40 à 59% en poids, d'un liant polymère dispersé,
(b) de 20 à 79% en poids, de préférence de 30 à 69% en poids, plus préférablement de 35 à 64% en poids, et le plus préférablement de 40 à 59% en poids, de particules d'oxyhydroxyde d'aluminium,
(c) de 0,1 à 10% en poids, de préférence de 0,3 à 5% en poids, plus préférablement de 0,5 à 2% en poids de cations métalliques multivalents dissous, et
(d) des contre-anions inorganiques et/ou organiques des cations métalliques, dans lequel les pourcentages en poids sont basés sur la teneur en solides de la composition de revêtement aqueux.

2. Composition de revêtement aqueux selon la revendication 1, dans laquelle les particules d'oxyhydroxyde d'aluminium sont sélectionnées parmi des particules de boehmite, des particules de pseudoboehmite, et des combinaisons de celles-ci et/ou ont une taille de particule médiane (Dᵥ₅₀) de 20 à 500 nm, de préférence de 30 nm à 300 nm, plus préférablement de 50 nm à 200 nm, et le plus préférablement de 80 à 180 nm comme déterminé par diffraction laser selon l'ISO 13320:2020-01.

3. Composition de revêtement aqueux selon les revendications 1 ou 2, dans laquelle le liant polymère dispersé (a) comprend des particules de polymère stabilisé non ioniquement ou des particules de polymère cationique, comme des particules de polyuréthane stabilisé non ioniquement, des particules de polyuréthane cationique, des particules de poly(méth)acrylate stabilisé non ioniquement, des particules de poly(méth)acrylate cationique, ou des combinaisons de celles-ci, de préférence des particules de polyuréthane stabilisé non ioniquement, des particules de polyuréthane cationique, ou des combinaisons de celles-ci.

4. Composition de revêtement aqueux selon l'une quelconque des revendications 1 à 3, dans laquelle les ions métalliques multivalents (c) sont sélectionnés parmi Ca²⁺, Mg²⁺, Zn²⁺, Al³⁺, Fe²⁺, Fe³⁺, Ti⁴⁺, Zr⁴⁺, et des combinaisons de ceux-ci, de préférence parmi Ca²⁺, Mg²⁺, Al³⁺, et des combinaisons de ceux-ci, et/ou les contre-anions (d) sont sélectionnés parmi chlorure, bromure, borate, nitrate, hydrogénosulfate, sulfate, hydrogénocarbonate, acétate, formiate, propanoate, sulfamate, succinate, citrate, lactate, glycérate, p-toluènesulfonate, et des combinaisons de ceux-ci, de préférence parmi chlorure, acétate et des combinaisons de ceux-ci.

5. Composition de revêtement aqueux selon l'une quelconque des revendications 1 à 4 comprenant en outre un liant polymère soluble dans l'eau (e) comme un alcool (poly)vinylique, de préférence ayant un degré d'hydrolyse de de 78 à 99 mol% remplaçant de >0 à 50% en poids, de préférence de 2 à 25% en poids du liant polymère dispersé (a), en se basant sur les solides.

6. Composition de revêtement aqueux selon l'une quelconque des revendications 1 à 5, comprenant en outre un agent dispersant acide (f) de préférence étant un acide organique et/ou inorganique ayant une valeur de pkₐ de moins de 5,0, de préférence moins de 4,9, plus préférablement moins de 4,0, même plus préférablement moins de 3,0, et le plus préférablement moins de 2,0, comme étant sélectionné parmi HCl, HBr, HNO₃, acide formique, acide acétique, acide propanoïque, acide lactique, acide citrique, acide sulfamique, et toutes combinaisons de ceux-ci, dans une quantité de >0 à 10% en poids, de préférence de 0,2 à 5% en poids, plus préférablement de 0,3 à 1% en poids, en se basant sur la quantité des particules d'oxyhydroxyde d'aluminium (a).

7. Substrat au moins en partie revêtu avec la composition de revêtement aqueux selon l'une quelconque des revendications précédentes 1 à 6 formant une couche d'apprêt imprimable par jet d'encre, de préférence ayant un poids de revêtement sec de 0,3 à 8,0 g/m², plus préférablement de 0,5 à 6,0 g/m², encore plus préférablement de 0,8 à 5,0 g/m², et le plus préférablement de 1,3 à 4,0 g/m².

8. Substrat revêtu selon la revendication 7, dans lequel le substrat est un substrat non absorbant ou un substrat faiblement absorbant sélectionné parmi des films de polymère incluant des stratifiés de film polymère de préférence comprenant une polyoléfine, comme du polypropylène, du polypropylène coulé (cPP) et du polypropylène orienté biaxialement (BOPP), et du polyéthylène, du polystyrène, un polyester comme du polytéréphtalate d'éthylène (PET, APET), par exemple du polytéréphtalate d'éthylène orienté biaxialement (BOPET), ou un polyamide ; du papier ou du carton revêtu ou stratifié avec des couches polymères, par exemple du papier photo revêtu de résine des deux côtés ; des feuilles métalliques ; des substrats revêtus ou stratifiés avec des feuilles métalliques ; des substrats de verre ; des substrats de céramique comme des tuiles ; des papiers barrière ; des papiers ou cartons de grande taille ou revêtus ou imprégnés, comme des papiers peints muraux, des papiers décoratifs, et des revêtements pour des cartons ondulés ; des toiles enduites ; et des textiles tissés ou non tissés enduits.

9. Substrat revêtu selon les revendications 7 ou 8, dans lequel la couche d'apprêt imprimable par jet d'encre formée à partir de la composition de revêtement aqueux est la couche imprimable par jet d'encre unique et/ou est en contact direct avec le substrat.

10. Procédé de revêtement d'un substrat comprenant d'appliquer la composition de revêtement aqueux selon l'une quelconque des revendications 1 à 6 sur le substrat pour obtenir une couche d'apprêt imprimable par jet d'encre, de préférence ayant un poids de revêtement sec de 0,3 à 8,0 g/m², plus préférablement de 0,5 à 6,0 g/m², encore plus préférablement de 0,8 à 5,0 g/m², et le plus préférablement de 1,3 à 4,0 g/m², dans lequel de préférence la composition de revêtement aqueux est directement appliquée sur le substrat et/ou la couche d'apprêt imprimable par jet d'encre formée à partir de la composition de revêtement aqueux est la couche imprimable par jet d'encre unique appliquée.

11. Procédé selon la revendication 10, comprenant en outre une étape de séchage actif, comme un séchage convectif, un séchage par contact, séchage IR, un séchage NIR, ou toute autre combinaison de ceux-ci.

12. Procédé selon la revendication 10 ou 11, dans lequel le substrat est défini selon la revendication 8.

13. Procédé de préparation d'un substrat revêtu par jet d'encre, comprenant les étapes de :
(i) préparé un substrat revêtu par le procédé selon l'une quelconque des revendications 10 à 12, et
(ii) imprimer la couche d'apprêt imprimable par jet d'encre du substrat revêtu obtenu dans l'étape (i) par un processus d'impression à jet d'encre à base d'eau de préférence par un processus d'impression à grande vitesse comme avec des vitesses d'impression de 5 à 300 m/min ou de 30 ou 60 à 300 m/min, plus préférablement par un processus d'impression à une seule passe.

14. Procédé selon la revendication 13, dans lequel l'encre aqueuse utilisée dans le processus d'impression à jet d'encre à base d'eau est une encre aqueuse à base de pigments, de préférence comprenant des pigments dispersés stabilisés anioniquement.

15. Procédé selon les revendications 13 ou 14, dans lequel l'encre pigmentée aqueuse comprend un liant polymère, de préférence comprenant un polymère anionique dissous ou dispersé ou un polymère dispersé stabilisé anioniquement, plus préférablement comprenant un polyuréthane anionique dispersé, un polyuréthane dispersé avec un surfactant anionique, un polymère (méth)acrylique anionique dispersé ou un polymère ou un copolymère (méth)acrylique anionique dispersé comme un copolymère styrène-(méth)acrylate anionique.

16. Utilisation de la composition de revêtement aqueux selon l'une quelconque des revendications 1 à 6 pour revêtir un substrat non absorbant ou faiblement absorbant pour obtenir une couche d'apprêt imprimable par jet d'encre, de préférence ayant un poids de revêtement sec de 0,3 à 8,0 g/m², plus préférablement de 0,5 à 6,0 g/m², encore plus préférablement de 0,8 à 5,0 g/m², et le plus préférablement de 1,3 à 4,0 g/m².

17. Utilisation selon la revendication 16, dans laquelle la couche d'apprêt imprimable par jet d'encre est la couche imprimable par jet d'encre unique.
